# EUROPÄISCHE PATENTSCHRIFT

(11) **EP 3 797 340 B1**
(45) Veröffentlichungstag und Bekanntmachung des Hinweises auf die Patenterteilung: **27.12.2023**
(21) Anmeldenummer: 19725921.1
(22) Anmeldetag: 15.05.2019
(51) Int. Cl.: G05D 1/02

(54) **SYSTEM ZUM ANZEIGEN EINER OPTISCHEN ABBILDUNG**
SYSTEM FOR DISPLAYING AN OPTICAL IMAGE
SYSTÈME D'AFFICHAGE D'UNE REPRÉSENTATION OPTIQUE

(30) Priorität: 23.05.2018 AT 5009918 U
(43) Veröffentlichungstag der Anmeldung: 31.03.2021
(73) Patentinhaber: Ars Electronica Linz GmbH & Co KG, 4040 Linz (AT)
(72) Erfinder: HÖRTNER, Horst, 4115 Kleinzell (AT); OGAWA, Hideaki, 4020 Linz (AT); HOLZKORN, Peter, 4040 Linz (AT)
(74) Vertreter: Röggla, Harald
(86) Internationale Anmeldenummer: PCT/AT2019/060163
(87) Internationale Veröffentlichungsnummer: WO 2019/222775

(56) Entgegenhaltungen:
- JAVIER ALONSO-MORA ET AL: "Image and animation display with multiple mobile robots", INTERNATIONAL JOURNAL OF ROBOTICS RESEARCH., Bd. 31, Nr. 6, 1. Mai 2012 (2012-05-01), Seiten 753-773, XP055575581, US ISSN: 0278-3649, DOI: 10.1177/0278364912442095

## Beschreibung

Die Erfindung betrifft ein System zum Anzeigen einer optischen Abbildung mittels unbemannter autonomer Fahrzeuge, wobei jedes Fahrzeug ein Display zum Anzeigen von zumindest einem Teil der Abbildung anhand von gespeicherten oder übermittelten Abbildungsinformationen und eine Steuereinheit aufweist, wobei die Steuereinheit zum Steuern der Abbildungsinformationen und zum Bewegen des Fahrzeugs mittels einer Antriebseinheit anhand von gespeicherten oder übermittelten Positionsinformationen ausgebildet ist.

Aus dem Stand der Technik sind Systeme bekannt, welche die Darstellung einer Abbildung im Luftraum mittels sogenannter "Drohnen", die im englischen Sprachgebrauch auch als "Unmanned Aerial Vehicle (UAV)" bezeichnet werden, ermöglichen. Die Darstellung solcher Abbildungen ist insbesondere im Zuge von Sportveranstaltungen oder vergleichbaren Veranstaltungen im öffentlichen oder privaten Raum von Interesse.

Die US 9 415 869 B1 offenbart ein System mit einer Vielzahl von UAVs, die jeweils ein in Betriebslage senkrecht ausgerichtetes Display tragen und mittels koordinierter Formation dieser Displays ein kombiniertes größeres Display ausbilden können. Die Displays sowie deren Tragekonstruktion müssen besonders leicht und folglich filigran sein, da die Tragfähigkeit der UAVs gering ist. Nachteilig ist bei diesem System außerdem, dass die Displays beispielsweise in einem Sportstadion immer nur von einer Seite gleichzeitig betrachtet werden können und dass dieses System nur bedingt eine Interaktion mit Personen, beispielsweise Künstlern oder Präsentatoren, zulässt.

JAVIER ALONSO-MORA, "Image and animation display with multiple mobile robots",INTERNATIONAL JOURNAL OF ROBOTICS RESEARCH., Bd. 31, Nr. 6, 1. Mai 2012, Seiten 753-773, offenbart ein System zum Anzeigen einer optischen Abbildung mittels autonomer Landfahrzeuge wobei jedes Fahrzeug ein horizontales Display zum Anzeigen von zumindest einem Teil der Abbildung aufweist.

Der Erfindung liegt die Aufgabe zugrunde, ein System zum Anzeigen einer optischen Abbildung zur Verfügung zu stellen, das obige Nachteile und/ oder Einschränkungen zumindest verringert.

Erfindungsgemäß wird diese Aufgabenstellung mit einem System gelöst, bei dem zumindest zwei Fahrzeuge als Landfahrzeuge ausgebildet sind, wobei die Displays der Landfahrzeuge in Betriebslage parallel zu einer im Wesentlichen horizontalen Abbildungsebene ausgerichtet und als von einer menschlichen Person betretbare Displays ausgebildet sind.

Das erfindungsgemäße System ist vorteilhaft in der Lage die optische Abbildung mittels der Displays im Wesentlichen horizontal in Bodennähe darzustellen, wodurch beispielsweise die Abbildung auf dem Spielfeld eines Sportstadions von allen Seiten gleichzeitig betrachtet werden kann und von den Zuschauerrängen deutlich besser zu sehen ist. Außerdem können die Displays von Personen, beispielsweise von Künstlern oder Präsentatoren, betreten werden, was eine verbesserte und vermehrte Interaktion mit diesen Personen zulässt.

In einer bevorzugten Ausführungsform weisen die Displays der Landfahrzeuge die geometrische Form eines gleichseitigen Polygons auf und sind mittels der Landfahrzeuge und der Steuereinheiten in zumindest eine, im Wesentlichen lückenlos parkettierte Bühnenanordnung bewegbar, in welcher Bühnenordnung die Displays zumindest eine betretbare und/ oder begehbare Bühne ausbilden. Es können so vorteilhaft eine oder mehrere bewegbare und veränderbare interaktive Bühnen, die beispielsweise von Personen und Künstlern betreten und begangen werden können, bereitgestellt werden.

Zweckmäßig weisen die Displays in der Abbildungsebene die geometrische Form eines regulären Sechsecks, eines gleichseitigen Dreiecks und/ oder einer Raute auf. Diese geometrischen Formen ermöglichen eine gute und einfache lückenlose Parkettierung.

Der Begriff "Parkettierung" ist dem Fachmann auch als "Kachelung", "Pflasterung" oder "Flächenschluss" bekannt.

In einer weiteren bevorzugten Ausführungsform weist das System eine Kontrollstation auf, die zum Bewegen der Fahrzeuge und/ oder zum Steuern der Abbildungsinformationen ausgebildet ist, wobei die Steuereinheiten und/ oder die Kontrollstation dazu ausgebildet ist/ sind, die Abbildungsinformationen basierend auf den Positionsinformationen des zugehörigen Fahrzeugs und/ oder basierend auf den Positionsinformationen der weiteren Fahrzeuge zu steuern. Die Abbildungsinformationen die von einem Display angezeigt werden, können so automatisch an die jeweilige Position oder an eine Abbildungsposition des entsprechenden Fahrzeugs angepasst werden.

Vorzugsweise sind die Positionsinformationen und die Abbildungsinformationen zeitlich veränderbare Informationen, wobei die Steuereinheiten und/ oder Kontrollstation dazu ausgebildet ist/ sind, die Abbildungsinformationen im Wesentlichen in Echtzeit anhand der Änderung der Positionsinformationen zu steuern. Auf diese Weise können einerseits Filme und/ oder Animationen von dem/den Displays angezeigt werden und andererseits können diese Abbildungsinformationen geplant, beispielsweise anhand eines vorgegebenen Pfades, den das Fahrzeug abfährt, oder ungeplant, beispielsweise, weil das Fahrzeug ein plötzliches Ausweichmanöver fahren muss, im Wesentlichen in Echtzeit an die aktuelle Position des Fahrzeugs angepasst werden.

Zweckmäßig ist das Display ein integraler Teil eines Gehäuses des Landfahrzeugs und/ oder wetterfest ausgebildet.

Zweckmäßig ist ein Landfahrzeug, sind vorzugsweise alle Landfahrzeuge, als Roboterfahrzeug/e und/ oder mit Mecanum-Rädern ausgebildet.

Zweckmäßig weist zumindest ein Landfahrzeug, weisen vorzugsweise alle Landfahrzeuge, Ausrichtemittel zum Anpassen der Ausrichtung des Displays an die Abbildungsebene auf.

In einer bevorzugten Ausführungsform ist zumindest ein Fahrzeug als unbemanntes Luftfahrzeug, insbesondere ein/e UAV/ Drohne, ein Ballon oder ein Luftschiff, und/ oder ist zumindest ein Fahrzeug als unbemanntes Wasserfahrzeug, insbesondere eine Wasserdrohne, eine Unterwasserdrohne oder eine marine Boje, ausgebildet.

In einer weiteren bevorzugten Ausführungsform bilden die Fahrzeuge zumindest einen Schwarm aus, wobei die Steuereinheiten und/ oder die Kontrollstation, insbesondere mittels Schwarmsteuereinheiten der Fahrzeuge, zum Bewegen der Fahrzeuge im Schwarmverbund ausgebildet ist/ sind.

Weitere beispielhafte Ausgestaltungen der Erfindung werde anhand der nachfolgenden Figuren beschrieben. Es zeigen jeweils in schematischer Darstellung:
Fig. 1 ein erfindungsgemäßes System nach einem ersten Ausführungsbeispiel.
Fig. 2 ein erfindungsgemäßes Landfahrzeug des Systems gemäß Fig. 1.
Fig. 3A bis 3F in einer Vogelperspektive Beispiele von Bühnenanordnungen mit lückenloser Parkettierung mit einem erfindungsgemäßen System.

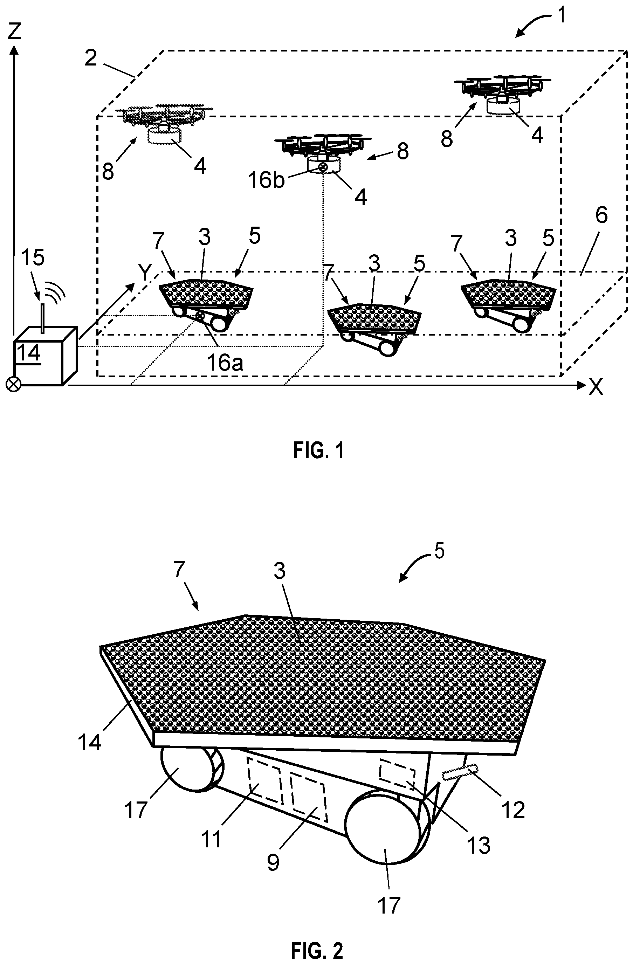

Fig. 1 zeigt in einer schematischen Darstellung ein System 1 gemäß einem ersten Ausführungsbeispiel der Erfindung zum Bereitstellen einer optischen Abbildung 2. Die Abbildung 2 wird mittels Displays 3 anhand von gespeicherten oder übermittelten Abbildungsinformationen dargestellt. Die Displays 3 können aus einer Anzahl von Bildpunkten/ Pixeln und auf zumindest einer der folgenden Technologien basieren: LCD, LED, OLED, Quantum Dot, "In-Glass". Jedes/ alle Displays 3 kann/ können die gesamte Abbildung 2 darstellen, was bedeutet, dass alle Displays 3 dasselbe, nämlich die Abbildung 2, darstellen. Alternativ können alle Displays 3 gemeinsam die gesamte Abbildung 2 darstellen, beispielsweise indem jedes Display 3 einen bestimmten Teil der Abbildung 2 darstellt, wobei die Summe aller Teile, also aller Displays 3 die gesamte Abbildung 2 ausbildet. Alternativ und/ oder zusätzlich können zwei oder mehrere Displays 3 einen bestimmten Teil der Abbildung 2 und/ oder verschiedene Abbildungen 2 darstellen.

Außerdem kann ein Teil der Abbildung 2, wie in Figur 1 beispielhaft dargestellt, zusätzlich mittels Leuchtelementen 4, beispielsweise durch Lichtquellen (LED, LASER) hinterleuchtete, halbdurchlässige Schirme, dargestellt werden.

Einem Fachmann sind obige/ weitere Möglichkeiten der Darstellung einer Abbildung im Sinne dieser Erfindung bekannt.

Die Displays 3 und die Leuchtelemente 4 werden von unbemannten autonomen Fahrzeugen getragen und anhand von gespeicherten oder übermittelten Positionsinformationen im Raum positioniert und/ oder bewegt. Das System 1 gemäß Figur 1 weist drei unbemannte autonome Fahrzeuge auf, die als Landfahrzeuge 5 ausgebildet sind. Ein solches Landfahrzeug 5 ist schematisch in Figur 2 näher dargestellt. Die Displays 3 der Landfahrzeuge 5 sind in Betriebslage parallel zu einer im Wesentlichen horizontalen Abbildungsebene 6 ausgerichtet. Außerdem sind die Displays 3 der Landfahrzeuge 5 von einer menschlichen Person betretbar, wodurch jedes Display 3 oder eine Bühnenanordnung 10 mehrerer Displays 3 eine betretbare und/ oder begehbare Bühne 7 ausbilden kann/können. Die Displays 3 können als integraler Teil eines Gehäuses 14 des Landfahrzeugs 5 und/ oder wetterfest ausgebildet sein. Das Landfahrzeug 5 kann als autonom fahrendes Roboterfahrzeug und/ oder mit Mecanum-Rädern 17 ausgebildet sein, wodurch sich das Roboterfahrzeug autonom in alle Richtungen bewegen kann, ohne einen "Wendekreis" berücksichtigen zu müssen. Das Landfahrzeug 5 kann weiters Ausrichtemittel, beispielsweise pneumatische Kolben zum Heben uns Senken (nicht dargestellt), zum Anpassen der Ausrichtung des Displays 3 an die Abbildungsebene 6 aufweisen, wodurch beispielsweise ein schräger Untergrund kompensiert werden kann.

Außerdem weist das System 1 gemäß Figur 1 drei unbemannte autonome Luftfahrzeuge, sogenannte UAVs 8, auf. Die UAVs 8 können Multikopter, beispielsweise "Oktokopter" mit acht Rotoreinheiten oder "Quadkopter" mit vier Rotoreinheiten, sein, wobei im Wesentlichen jede beliebige Anzahl von Rotoreinheiten möglich ist. Alternativ oder zusätzlich kann das System 1 zumindest ein weiteres Fahrzeug aus der folgenden Liste aufweisen: ein unbemanntes Luftfahrzeug, insbesondere einen Ballon oder ein Luftschiff, oder ein unbemanntes Wasserfahrzeug, insbesondere eine Wasserdrohne, eine Unterwasserdrohne oder eine marine Boje. All diese unterschiedlichen Fahrzeuge des Systems 1 können jeweils ein oder mehrere Displays, Leuchtelemente oder andere Einheiten zur Unterstützung der gesamten optischen Abbildung durch das System 1 aufweisen.

Die Fahrzeuge, also die Landfahrzeuge 5 und die UAVs 8, umfassen eine Steuereinheit 9 zum Steuern der Abbildungsinformationen und zum Bewegen des Fahrzeugs mittels einer Antriebseinheit 11, beispielsweise einem Elektromotor, anhand der Positionsinformationen. Die Steuereinheit 9 kann aus mehreren Komponenten bestehen, wobei jede Komponente zum Ausführen einer Funktion ausgebildet ist. Zum Speichern der Positionsinformationen und/ oder der Abbildungsinformationen kann das Fahrzeug und/ oder die Steuereinheit 9 eine Speichereinheit (nicht dargestellt) aufweisen. Zum Empfangen der Positionsinformationen und/ oder Abbildungsinformationen kann das Fahrzeug und/ oder die Steuereinheit 9 eine Kommunikationseinheit 12 aufweisen. Zum Bestimmen und/ oder Kommunizieren der Positionsinformationen kann das Fahrzeug und/ oder die Steuereinheit 9 zumindest einen Positionssensor 13 aufweisen.

Der zumindest eine Positionssensor 13 kann zumindest einer aus der folgenden Aufzählung sein: Inertiale Messeinheit für Weg, Abstand und/ oder Position, Beschleunigungssensor, Lagesensor, Kapazitiver Sensor für Weg, Abstand und/ oder Position, Laser-Sensor für Weg, Abstand und/ oder Position, Konfokales Sensorsystem für Weg, Abstand und/ oder Position, Magneto-induktiver Abstandssensor, Hall-Effekt-Sensor für Position, GPS-Empfänger oder Empfänger für ein vergleichbares Satelliten-Navigationssystem, beispielweise Galileo, GLONASS oder Beidou/ Compass.

Das System 1 gemäß Figur 1 umfasst eine boden-basierte Kontrollstation 14 mit einer Kommunikationseinheit 15. Mittels der Kontrollstation 14 können die Fahrzeuge, also die Landfahrzeuge 5 und die UAVs 8, bewegt und die Darstellung der jeweiligen Abbildungsinformationen der Displays 3 gesteuert werden. Dabei kommuniziert die Kontrollstation 14 über die Kommunikationseinheiten 12 und 15 mit den Steuereinheiten 9. Die Kontrollstation 14 kann zumindest eines aus der folgenden Aufzählung umfassen: PC, Laptop, Tablet-Computer und Smartphone. Die Kontrollstation 14 kann zumindest eine Benutzerschnittstelle aufweisen, wobei ein Benutzer (nicht dargestellt) über die Benutzerschnittstelle die Fahrzeuge und/ oder die Abbildung steuern kann.

Ein Benutzer kann, beispielsweise über die Benutzerschnittstelle, die Durchführung einer Darstellung der Abbildung 2 manuell starten. Danach läuft die Durchführung der Darstellung der Abbildung 2 automatisch ab. Die Positionsinformationen und die Abbildungsinformationen werden beispielsweise mittels der Steuereinheiten 9 und/ oder der Kontrollstation 14 automatisch anhand eines Programmcodes abgearbeitet.

Die Steuereinheiten 9 und/ oder die Kontrollstation 14 ist/ sind dazu ausgebildet, die Fahrzeuge gemäß den Positionsinformationen, beispielsweise die Abbildungsposition 16a eines Landfahrzeugs 5 in Figur 1, zu bewegen und den jeweiligen Abbildungspositionen, beispielsweise an der Abbildungsposition 16a, über das Display 3 die entsprechenden Abbildungsinformationen darzustellen. Die Abbildungsinformationen und die Positionsinformationen werden von der Kontrollstation 14 und/ oder den Steuereinheiten 9 berechnet und gegebenenfalls über die Kommunikationseinheiten 12 und 15 übertragen.

Alternativ oder zusätzlich kann ein Teil oder die gesamten Abbildungsinformationen und/ oder Positionsinformationen in der Speichereinheit gespeichert sein und durch die Steuereinheiten 9 abgearbeitet werden. Sind alle Abbildungsinformationen und/ oder Positionsinformationen in der Speichereinheit der Fahrzeuge gespeichert, wird gegebenenfalls keine Kontrollstation 14 benötigt.

In Figur 1 basieren die Abbildungspositionen, beispielsweise 16a und 16b, auf relativen Koordinaten, die entlang dreier virtueller Raumachsen X, Y und Z definiert sind. Dies ist insbesondere bei Indoor-Anwendungen in Gebäuden vorteilhaft. Ein Fahrzeug wird basierend auf den Positionsinformationen an eine Abbildungsposition, beispielsweise 16a oder 16b, bewegt, die durch die Kontrollstation 14, die Steuereinheit 9 und/ oder den Positionssensor 13, beispielsweise eine inertiale Messeinheit, berechnet wird. Im Folgenden, kann das Fahrzeug entlang einer räumlichen oder zeitlichen Sequenz von Abbildungspositionen bewegt werden, die auf einer vorbestimmten Route oder einem vorbestimmten "Pfad" basieren können.

Alternativ können die Positionsinformationen absolute Koordinaten sein wie zum Beispiel "Global Positioning System (GPS)" - basierte Koordinaten, zum Beispiel Daten im GPS-Exchange-Format (GPX). Die Daten im GPX-Format können Geodaten enthalten, also die geografische Koordinatenbreite, -länge und -höhe. Alternativ können die Daten auch auf Galileo, GLONASS, Beidou / Compass oder einem anderen Satellitennavigations- und / oder -zeitsystem oder auf einem lokalen oder Gebäude-basierten Navigationssystem basieren. Das Fahrzeug kann hierzu einen Positionssensor 13 der oben angeführten Art verwenden, um immer die aktuelle Position oder Abbildungsposition des Fahrzeugs mit der vordefinierten Position oder Abbildungsposition zu vergleichen.

Die Abbildungsposition kann räumlich statisch sein, was bedeuten kann, dass die Positionsinformationen während der Darstellung der Abbildung 2, beziehungsweise nachdem alle Fahrzeuge ihre Abbildungsposition erreicht haben, nur statische Informationen beinhaltet. Somit halten die Fahrzeuge ihre Abbildungsposition während der gesamten Darstellung der Abbildung 2. Alternativ können die Positionsinformationen dynamische Information aufweisen, was bedeuten kann, dass sich eine, mehrere oder alle Abbildungsposition/en während der Darstellung der Abbildung 2 verändert/n. Alternativ können die Positionsinformationen statische und dynamische Information aufweisen.

Die Abbildungsinformationen können nur statische Informationen aufweisen, was bedeuten kann, dass die Displays 3 während der gesamten Darstellung der Abbildung 2 dieselbe Abbildung 2, beispielsweise ein Bild, oder denselben Teil der Abbildung 2 anzeigen. Alternativ kann die Abbildung 2 dynamische Information, beispielsweise ein Video oder eine Animation, aufweisen. Die Displays 3 können dann beispielsweise einen bestimmten Teil der Abbildung 2 oder einen bestimmten Frame zu einem bestimmten Zeitpunkt anzeigen. Alternativ kann die Abbildung 2 eine Kombination aus einem oder mehreren Bildern mit einem oder mehreren Videos sein.

Der angezeigte Inhalt eines, mehrerer oder aller Displays 3 kann von der Abbildungsposition abhängen oder an diese angepasst werden, weshalb der angezeigte Inhalt eines Displays 3 auf den Positionsinformationen des zugehörigen Fahrzeugs und/ oder auf den Positionsinformationen der weiteren Fahrzeuge des Systems 1 basieren kann. Beispielsweise kann der angezeigte Inhalt eines, mehrerer oder aller Displays 3 jeweils nur ein bestimmter Teil der Abbildung 2 sein, wobei dieser bestimmte Teil, der von dem/ den Displays 3 angezeigt wird, von der/ den aktuellen Abbildungsposition/en abhängt. Ein Landfahrzeug 5 kann sich so beispielsweise scheinbar "durch die Abbildung 2 bewegen", wobei sich das Display 3 des Landfahrzeugs 5 scheinbar "durch die Abbildungsebene 6 bewegt" und jeweils den Teil der Abbildung 2 anzeigt, der aktuell mit der Abbildungsposition korreliert.

Die Abbildungsinformationen und die Positionsinformation können im Wesentlichen in Echtzeit berechnet und/ oder übermittelt werden, wodurch eine reibungslose Kommunikation gewährleistet ist und wobei gegebenenfalls die Information bezüglich einer Abbildungsposition und / oder bezüglich des angezeigten Teils der Abbildung 2, beispielsweise anhand einer geplanten oder ungeplanten Änderung der Abbildungsposition, jederzeit aktualisiert werden können.

Die Kontrollstation 14 und/ oder die Steuereinheiten 9 können zusätzlich ausgebildet sein, Zeitcode-Signale über die Kommunikationseinheiten 12 und/ oder 15 zu übertragen, um eine Zeitcode-Synchronisation der Abbildungsinformationen und/ oder der Positionsinformationen durchzuführen. Dies ist insbesondere wichtig, wenn die Abbildungsinformationen und die Positionsinformationen eine Kombination aus dynamischen Positionsinformationen und dynamischen Abbildungsinformationen umfassen. Basierend auf dem tatsächlichen Zeitcodesignal entscheidet die entsprechende Steuereinheit 9, welche Abbildungsinformationen, beispielsweise welcher Frame der Videodaten, auf dem Display 3 angezeigt wird. Zusätzlich kann eine Zeitcodesynchronisation zwischen den einzelnen Fahrzeugen erfolgen, insbesondere wenn keine Kontrollstation 14 vorhanden ist. Alternativ kann eine Zeitcodesynchronisation durch Lesen des Zeitcodes von einer globalen Zeitsynchronisationsquelle, zum Beispiel GPS oder DGPS, erreicht werden, die für alle Fahrzeuge verfügbar ist. Alternativ kann eine Zeitcodesynchronisation erreicht werden, indem alle Fahrzeuge zu Beginn manuell synchronisiert werden.

In einer alternativen Ausführungsform bilden die Fahrzeuge zumindest einen Schwarm aus. Die Fahrzeuge können hierzu eine Schwarmsteuereinheit (nicht dargestellt) und Positionssensoren 13, insbesondere eine Mehrzahl an Abstandssensoren, aufweisen, wobei die Positionssensoren 13 ständig die Entfernung zu den benachbarten Fahrzeugen im Wesentlichen in Echtzeit ermitteln. Dies Schwarmsteuereinheiten können mit den Steuereinheiten 9 der Fahrzeuge kommunizieren oder in diese integriert sein. Die Kontrollstation 14 und / oder die Steuereinheiten 9 können dann im Wesentlichen in Echtzeit die Positionsinformationen und / oder die Abbildungsinformationen über Feedback der Positionssensoren 13 aktualisieren und die Fahrzeug gemäß von Schwarmintelligenz bewegen. Ein Fachmann kennt die Grundprinzipien der Schwarmintelligenz.

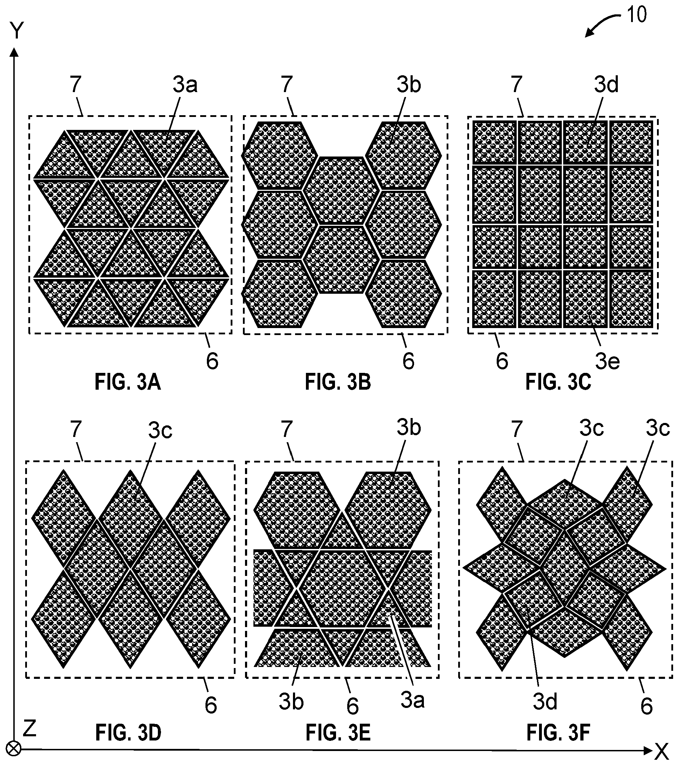

Die Displays 3 der Landfahrzeuge 5 weisen vorzugsweise die geometrische Form eines gleichseitigen Polygons auf. Mittels der Landfahrzeuge 5 und der Steuereinheiten 9 sind zumindest zwei dieser Displays 3 in eine, im Wesentlichen lückenlos parkettierte Bühnenanordnung 10 bewegbar, in welcher Bühnenordnung 10 die Displays 3 eine betretbare und/ oder begehbare Bühne 7 ausbilden. Beispiele solcher Bühnenanordnungen 10 mit einer lückenlosen Parkettierung, die mit Landfahrzeugen 5 eines erfindungsgemäßen Systems erzielt werden können, sind in den Figuren 3A bis 3F dargelegt. Dabei weisen die Displays 3 in der Abbildungsebene 6 die geometrische Form eines gleichseitigen Dreiecks 3a, eines regulären Sechsecks 3b, einer Raute 3c, eines Quadrats 3d und/ oder eines Rechtecks 3e auf. Die Displays 3a, 3b, 3c, 3d und/ oder 3e bilden eine, von einer Person betretbare und/ oder begehbare Bühne 7 aus, die im Wesentlichen horizontal und parallel zur Bildebene 6 ausgerichtet ist. Alternative oder zusätzlich können mehrere bewegbare und veränderbare interaktive Bühnen 7 ausgebildet werden, die beispielsweise von Personen und Künstlern betreten und begangen werden können, wobei die Abbildung 2 mit den Personen interagiert, beispielsweise auf deren Bewegungen "reagiert".

Es ist weiters zu erwähnen, dass ein erfindungsgemäßes System auch für andere Anwendungen eingesetzt werden kann, beispielsweise für Rettungseinsätze. Unbemannte Landfahrzeuge 5 und/ oder UAVs 8 können mittels eines Displays 3 und/ oder eines Leuchtmittels 4 zur Signalgebung oder Informationsdarstellung für gefährdete und/ oder verletzte Personen ausgebildet sein. Unbemannte Wasserfahrzeuge (nicht dargestellt) können mittels erfindungsgemäßen Displays 3, die gemäß obiger Beschreibung in eine betretbare Plattform bewegbar sind, eine Rettungsplattform am Wasser ausbilden, um hilfesuchenden und/ oder verletzten Personen eine temporäre schwimmende Rettungsinsel zu bieten.

## Patentansprüche

1. System (1) zum Anzeigen einer optischen Abbildung (2) mittels unbemannter autonomer Fahrzeuge, wobei jedes Fahrzeug ein Display zum Anzeigen von zumindest einem Teil der Abbildung (2) anhand von gespeicherten oder übermittelten Abbildungsinformationen und eine Steuereinheit (9) aufweist, wobei die Steuereinheit (9) zum Steuern der Abbildungsinformationen und zum Bewegen des Fahrzeugs mittels einer Antriebseinheit (11) anhand von gespeicherten oder übermittelten Positionsinformationen ausgebildet ist,
**dadurch gekennzeichnet, dass**
zumindest zwei Fahrzeuge als Landfahrzeuge (5) ausgebildet sind, wobei die Displays (3) der Landfahrzeuge (5) in Betriebslage parallel zu einer im Wesentlichen horizontalen Abbildungsebene (6) ausgerichtet und als von einer menschlichen Person betretbare Displays (3) ausgebildet sind, wobei zumindest ein Landfahrzeug (5), vorzugsweise alle Landfahrzeuge (5), Ausrichtemittel zum Anpassen der Ausrichtung des Displays (3) an die Abbildungsebene (6) aufweist/ aufweisen.

2. System (1) gemäß Anspruch 1, wobei die Displays (3) der Landfahrzeuge (5) die geometrische Form eines gleichseitigen Polygons aufweisen und mittels der Landfahrzeuge (5) und der Steuereinheiten (9) in zumindest eine, lückenlos parkettierte Bühnenanordnung (10) bewegbar sind, in welcher Bühnenordnung (10) die Displays (3) zumindest eine betretbare und/ oder begehbare Bühne (7) ausbilden.

3. System (1) gemäß Anspruch 1 oder 2, wobei die Displays (3) in der Abbildungsebene (6) die geometrische Form eines regulären Sechsecks (3b), eines gleichseitigen Dreiecks (3a) und/ oder einer Raute (3c) aufweisen.

4. System (1) gemäß einem der Ansprüche 1 bis 3, wobei das System (1) eine Kontrollstation (14) aufweist, die zum Bewegen der Fahrzeuge und/ oder zum Steuern der Abbildungsinformationen ausgebildet ist, wobei die Steuereinheiten (9) und/ oder die Kontrollstation (14) dazu ausgebildet ist/ sind, die Abbildungsinformationen basierend auf den Positionsinformationen des zugehörigen Fahrzeugs und/ oder basierend auf den Positionsinformationen der weiteren Fahrzeuge zu steuern.

5. System (1) gemäß Anspruch 4, wobei die Positionsinformationen und die Abbildungsinformationen zeitlich veränderbare Informationen sind, wobei die Steuereinheiten (9) und/ oder Kontrollstation (14) dazu ausgebildet ist/ sind, die Abbildungsinformationen im Wesentlichen in Echtzeit anhand der Änderung der Positionsinformationen zu steuern.

6. System (1) gemäß einem der Ansprüche 1 bis 5, wobei das Display (3) ein integraler Teil eines Gehäuses (14) des Landfahrzeugs (5) ist und/ oder wetterfest ausgebildet ist.

7. System (1) gemäß einem der Ansprüche 1 bis 6, wobei zumindest ein Landfahrzeug (5), vorzugsweise alle Landfahrzeuge (5), als Roboterfahrzeug/e und/ oder mit Mecanum-Rädern (17) ausgebildet ist/ sind.

8. System (1) gemäß einem der Ansprüche 1 bis 7, wobei zumindest ein Fahrzeug als unbemanntes Luftfahrzeug, insbesondere ein/e UAV (8)/ Drohne, ein Ballon oder ein Luftschiff, und/ oder zumindest ein Fahrzeug als unbemanntes Wasserfahrzeug, insbesondere eine Wasserdrohne, eine Unterwasserdrohne oder eine marine Boje, ausgebildet ist.

9. System (1) gemäß einem der Ansprüche 4 bis 8, wobei die Fahrzeuge zumindest einen Schwarm ausbilden, wobei die Steuereinheiten (9) und/ oder die Kontrollstation (14), insbesondere mittels Schwarmsteuereinheiten der Fahrzeuge, zum Bewegen der Fahrzeuge im Schwarmverbund ausgebildet ist/ sind.

## Claims

1. A system (1) for displaying an optical image (2) by means of unmanned autonomous vehicles, wherein each vehicle has a display for displaying at least a part of the image (2) by way of stored or transmitted image information as well as a control unit (9), wherein the control unit (9) is configured to control the image information and to move the vehicle using a drive unit (11) by means of stored or transmitted position information,
**characterized in that**
at least two vehicles are configured as land crafts (5), wherein the displays (3) of the land crafts (5) in the operational position are oriented in parallel to a substantially horizontal image plane (6) and configured as displays (3) accessible by a human person, wherein at least one land craft (5), preferably all land crafts (5), has/have orientation means for adjusting the orientation of the displays (3) to the image plane (6).

2. A system (1) according to claim 1, wherein the displays (3) of the land crafts (5) have the geometrical form of an equilateral polygon and may be moved by means of the land crafts (5) and the control units (9) into at least one substantially seamlessly parquetted stage assembly (10), in which stage assembly (10) the displays (3) form at least one accessible and/or walk-on stage (7).

3. A system (1) according to claim 1 or 2, wherein the displays (3) in the image plane (6) have the geometrical form of a regular hexagon (3b), an equilateral triangle (3a) and/or a rhomb (3c).

4. A system (1) according to any of claims 1 to 3, wherein the system (1) has a control station (14), which is configured to move the vehicles and/or to control the image information, wherein the control units (9) and/or the control station (14) is/are configured to control the image information on the basis of the position information of the associated vehicle and/or on the basis of the position information of the further vehicles.

5. A system (1) according to claim 4, wherein the position information and the image information are temporally variable information, wherein the control units (9) and/or the control station (14) is/are configured to control the image information substantially in real time by way of the variation of the position information.

6. A system (1) according to any of claims 1 to 5, wherein the display (3) is an integral part of a housing (14) of the land craft (5) and/or configured to be weather-proof.

7. A system (1) according to any of claims 1 to 6, wherein at least one land craft (5), preferably all land crafts (5), is/are configured as robot vehicle/s and/or having mecanum wheels (17).

8. A system (1) according to any of claims 1 to 7, wherein at least one vehicle is configured as an unmanned aerial vehicle, in particular a UAV (8) / drone, a balloon or an airship, and/or at least one vehicle is configured as an unmanned water craft, in particular a water drone, a submarine drone or a marine buoy.

9. A system (1) according to any of claims 4 to 8, wherein the vehicles form at least one swarm flight formation, wherein the control units (9) and/or the control station (14) is/are configured to move the vehicles in a swarm flight formation, in particular by means of the swarm flight formation control units of the vehicles.

## Revendications

1. Système (1) pour l'affichage d'une représentation optique (2) au moyen de véhicules autonomes sans conducteur, dans lequel chaque véhicule contient un écran pour afficher au moins une partie de la représentation (2) par le biais d'informations de représentation mémorisées ou transmises et une unité de commande (9), laquelle unité de commande (9) est configurée pour gérer les informations de représentation et pour déplacer le véhicule au moyen d'une unité motrice (11) par le biais d'informations de position mémorisées ou transmises,
**caractérisé**
**en ce qu'**au moins deux véhicules sont configurés comme des véhicules terrestres (5), les écrans (3) des véhicules terrestres (5) étant orientés, en position de fonctionnement, parallèlement à un plan de représentation (6) sensiblement horizontal et configurés comme des écrans (3) accessibles par une personne, au moins un véhicule terrestre (5), et de préférence tous les véhicules terrestres (5), comportant des moyens d'orientation pour adapter l'orientation de l'écran (3) au plan de représentation (6).

2. Système (1) selon la revendication 1, dans lequel les écrans (3) des véhicules terrestres (5) présentent la forme géométrique d'un polygone équilatéral et peuvent être déplacés au moyen des véhicules terrestres (5) et des unités de commande (9) dans au moins une disposition scénique (10) parquetée en continu, dans laquelle disposition scénique (10) les écrans (3) forment au moins une scène accessible et praticable.

3. Système (1) selon la revendication 1 ou 2, dans lequel les écrans (3) présentent dans le plan de représentation (6) la forme géométrique d'un hexagone équilatéral (3b), d'un triangle équilatéral (3a) et/ou d'un losange (3c).

4. Système (1) selon une des revendications 1 à 3, lequel système (1) comporte une station de contrôle (14) qui est configurée pour déplacer les véhicules et/ou pour gérer les informations de représentation, les unités de commande (9) et/ou la station de contrôle (14) étant configurées pour gérer les informations de représentation sur la base des informations de position du véhicule concerné et/ou sur la base des informations de position des autres véhicules.

5. Système (1) selon la revendication 4, dans lequel les informations de position et les informations de représentation sont des informations variables dans le temps, les unités de commande (9) et/ou la station de contrôle (14) étant configurées pour gérer les informations de représentation sensiblement en temps réel par le biais de la variation des informations de position.

6. Système (1) selon une des revendications 1 à 5, dans lequel l'écran (3) fait partie intégrante d'une caisse (14) du véhicule terrestre (5) et/ou est résistant aux intempéries.

7. Système (1) selon une des revendications 1 à 6, dans lequel au moins un véhicule terrestre (5), de préférence tous les véhicules terrestres (5), est/sont configuré(s) comme un/des véhicule(s) robotisé(s) et/ou doté(s) de roues mecanum.

8. Système (1) selon une des revendications 1 à 7, dans lequel au moins un véhicule est configuré comme un aéronef sans pilote, en particulier un UAV (8)/drone, un ballon ou un dirigeable, et/ou au moins un véhicule est configuré comme une embarcation sans pilote, en particulier un drone marin, un drone sous-marin ou une bouée marine.

9. Système (1) selon une des revendications 4 à 8, dans lequel les véhicules constituent au moins un essaim, les unités de commande (9) et/ou la station de contrôle (14) étant configurées pour déplacer les véhicules en essaim, en particulier au moyen d'unités de commande en essaim des véhicules.
